# EUROPEAN PATENT APPLICATION

(11) **EP 4 354 244 A1**
(43) Date of publication of application: **17.04.2024**
(21) Application number: 23203337.3
(22) Date of filing: 12.10.2023
(51) Int. Cl.: G05B 23/02, G06N 20/00

(54) **ANOMALY DETECTION FOR INDUSTRIAL ASSETS**

(30) Priority: 12.10.2022 US 202263415364 P; 06.10.2023 US 202318482325
(71) Applicant: Baker Hughes Holdings LLC, Houston, TX 77073 (US)
(72) Inventor: ASIF, Wajih, Houston, 77073 (US); CHATTERJEE, Somesh, Houston, 77073 (US); GANDHI, Sahil, Houston, 77073 (US); POLEPEDDY, Indukaladhar, Houston, 77073 (US); LERTPRASERTWECH, Krissada, Doncaster, 3108 (AU); SHAH, Nirjara, Houston, 77073 (US); GRANT, John, Gardnerville, 89410 (US); BAXTER, Benjamin, Gardnerville, 89460 (US)
(74) Representative: Illingworth-Law, William Illingworth

(57) **Abstract**

Systems, methods, and computer readable storage mediums for performing sensor health monitoring are described. The method includes receiving data characterizing measurement data values acquired by a sensor coupled to an industrial asset, identifying an anomalous data sample within the received data, removing the anomalous data sample to generate cleaned training data, training a model using the cleaned training data, generate a predicted asset data using the model, and determining an anomalous data in a new sample of asset data based on a difference between the new sample of the asset data to the predicted asset data.

## Description

### RELATED APPLICATION

This application claims priority under 35 U.S.C. § 119(e) to U.S. Provisional Application No. 63/415,364 filed October 12, 2022, the entire contents of which are hereby expressly incorporated by reference herein.

### TECHNICAL FIELD

This disclosure relates generally to asset monitoring systems such as asset monitoring systems regardless of asset configurations.

### BACKGROUND

Industrial equipment can be complex and can be prone to different types of complex modes of failure. The equipment can include a multitude of sensors that can be used to monitor operation of the equipment. One method of utilizing sensor data includes developing rule-based detection schemes that can be used to monitor performance of the equipment. Based on the rules implemented within the detection schemes, the sensors, or a controller monitoring the sensors, can determine if the equipment is operating within acceptable parameters. Many of the existing rules are applicable to existing machines but have very limited applicability to completely new equipment with unknown configurations.

### SUMMARY

Systems for asset monitoring are provided. The systems performing asset monitoring without knowing the asset configuration information by automatically identifying a normal operating region of an asset's historic data in order to identify significant and/or meaningful anomalies that deviate from a normal mode of operation, as learned by a machine learning model, are described. Related apparatus, systems, techniques, and articles are also described.

In one aspect, a method includes: receiving data characterizing measurement data values acquired by a sensor coupled to an industrial asset, processing the data to determine cleaned training data that excludes derived measurements, training a model using the cleaned training data, generate a predicted asset data using the model, determining deviation data in a new sample of asset data based on a difference between the new sample of the asset data to the predicted asset data, determining, based on the deviation data and historical deviation data, deviations across measurements over time, and infer a severity of an anomaly based on the deviations across measurements over time, the severity being used to generate an alert.

In some implementations, the method can include controlling operation of the asset based on one or more of the predicted asset data, the deviation data and the deviations across measurements over time. The sensor can be affixed to an asset in an industrial environment and the data further characterizes a state of health of the asset. The sensor can be included in a sensor health monitoring system associated with the industrial environment and the data further characterizes a state of health of the sensor.

In some embodiments the method can also include determining one or more states of the asset based on the cleaned training data. In some embodiments the method can further include selecting a portion of the data for training the model and determining one or more dynamic thresholds for the selected portion of the data. In some embodiments, selecting the portion of the data for training the model can include removing outliers from the data to generate the cleaned training data. In some embodiments, selecting the portion of the data for training the model includes resizing the portion of the data within a set standard deviation range. In some embodiments, the one or more dynamic thresholds are determined based on the set standard deviation range to exclude an anomalous region. In some embodiments, model comprises one or more machine learning models trainable to generate the predicted asset data. In this case, the one or more machine learning models can be recalibrated and updated based on a fit of two or more estimated new samples falling outside of the one or more dynamic thresholds. The method can also include generating data mapping based on a data validation rule. In this case, the data validation rule verifies association between datatype of the data from the sensor and a pre-determined data tag.

In another aspect, a system includes receiving data characterizing measurement data values acquired by a sensor coupled to an industrial asset, processing the data to determine cleaned training data that excludes derived measurements, training a model using the cleaned training data, generate a predicted asset data using the model, determining deviation data in a new sample of asset data based on a difference between the new sample of the asset data to the predicted asset data, determining, based on the deviation data and historical deviation data, deviations across measurements over time, and infer a severity of an anomaly based on the deviations across measurements over time, the severity being used to generate an alert.

In some embodiments, the operations performed by the processor of the system can further include controlling operation of the asset based on one or more of the predicted asset data, the deviation data and the deviations across measurements over time. In some embodiments, the sensor is affixed to an asset in an industrial environment and the data further characterizes a state of health of the asset. In some embodiments the sensor is included in a sensor health monitoring system associated with the industrial environment and the data further characterizes a state of health of the sensor. In some embodiments, the data processor can further perform operations including determining one or more states of the asset based on the cleaned training data, selecting a portion of the data for training the model, determining one or more dynamic thresholds for the selected portion of the data and removing outliers from the data and resizing the portion of the data within a set standard deviation range. In some embodiments, the processor can provide one or more of the data characterizing measurement data values, the cleaned training data, the one or more states of the asset, the portion of the data for training the model, the dynamic thresholds, predicted asset data, the deviation data and the deviations across measurements over time to a graphical user interface display. In some embodiments, the severity of the anomaly is inferred by aggregating the deviation data across a time interval.

In another aspect, a non-transitory computer readable storage medium containing program instructions, which when executed by at least one data processor causes the at least one data processor to perform operations including: receiving data characterizing measurement data values acquired by a sensor coupled to an industrial asset, processing the data to determine cleaned training data that excludes derived measurements, training a model using the cleaned training data, generate a predicted asset data using the model, determining deviation data in a new sample of asset data based on a difference between the new sample of the asset data to the predicted asset data, determining, based on the deviation data and historical deviation data, deviations across measurements over time, and infer a severity of an anomaly based on the deviations across measurements over time, the severity being used to generate an alert.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

FIG. 1 illustrates an example of a system, according to some implementations of the current subject matter;
FIG. 2 illustrates an example of a system for asset data collection, according to some implementations of the current subject matter;
FIG. 3 illustrates an example of a process flow diagram, according to some implementations of the current subject matter; and
FIG. 4 is an example of system, according to some implementations of the current subject matter.

Like reference symbols in the various drawings indicate like elements.

### DETAILED DESCRIPTION

Some environments, for example industrial environments, can include a multitude of assets that can be monitored to diagnose their operating conditions. An asset can include a complex machine (e.g., a gearbox) formed of multiple components that need to be monitored and maintained. The components can develop faults during the course of their operation (e.g., a crack in a component of the gearbox). Faults can appear in the asset prior to a malfunction that renders the asset unusable. Thus, detection of asset faults at early stages can prolong (e.g., by performing appropriate maintenance to be performed in a timely manner) the life of the asset. The fault can be detected by detecting a vibration associated with the operation of the asset (e.g., operation of the faulty component) or by detecting deviations from process parameters. The detected vibration can be characterized by a fault frequency, and the detection of the fault frequency can be indicative of the presence of the fault in the asset. However, vibrations detected from an operating asset can include various unrelated vibrations (e.g., vibrations generated by gear imbalance, misalignment between gears and the driving components, etc.) that can make it challenging to accurately detect vibrations having the fault frequency. Current predictive diagnostics use a set of rules associated with known asset configurations to differentiate between fault frequencies and normal vibrations associated with correct (standard) functionality. However, the existent set of rules has limited applicability to assets with new, complex and unknown configurations.

Predictive diagnostics, as described herein, can be applied to assets with new, complex and unknown configurations by automatically identifying a normal operating region of asset's historic data. The normal operating region can be identified using a machine learning model that can be trained to generate vibration and process parameter predictions. The model predictions can be used to process the actual data to identify if an asset deviates from the normal mode of operation as learned by a machine learning model. The provided solution can include a generic machine learning model that can be applied on most asset types without knowing their configuration information. Some aspects of the current subject matter can facilitate early asset monitoring of new assets to identify anomalies and generate alerts to trigger asset repairs and prevent the assets from becoming unusable due to malfunctions.

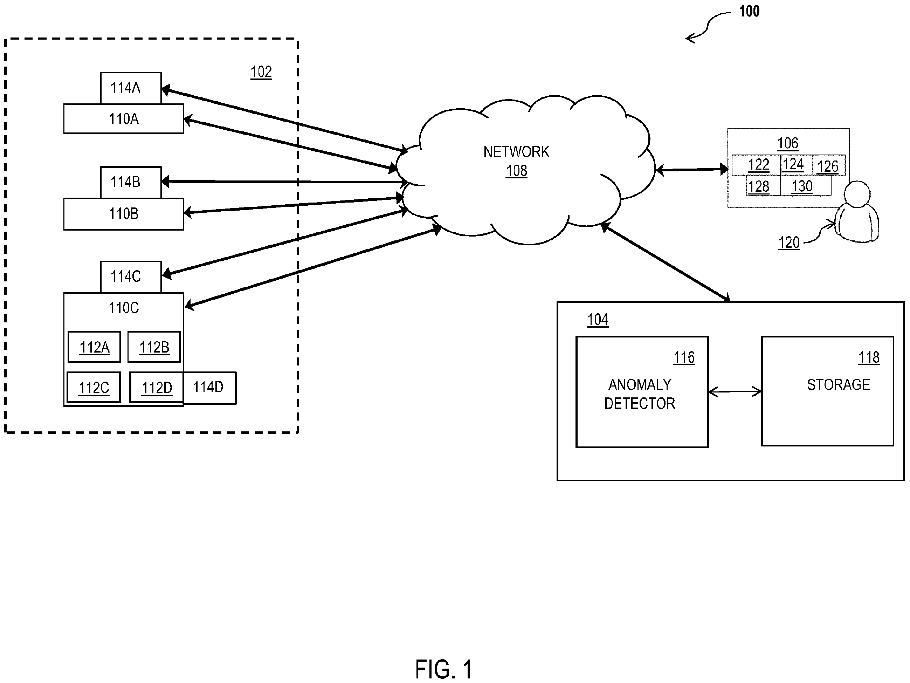

FIG. 1 illustrates an example of system 100, according to some implementations of the current subject matter. The system 100 may include an industrial environment 102, an anomaly detection system 104, a user equipment 106, and a network 108. As discussed in further detail herein, the industrial environment 102 includes assets 110A, 110B, 110C. Each asset 110A, 110B, 110C can include a machine formed of multiple components 112A, 112B, 112C, 112D. For example, assets 110A, 110B, 110C can include a compressor, a pump, a pump motor, a compressor, a motor, a heat exchanger, a turbine, a turbomachinery, or other machines that can be critical to the overall operation of the industrial environment 102. In some implementations, two or more assets 110A, 110B, 110C are connected to each other to perform a joint process. Each asset 110A, 110B, 110C can be monitored by a respective sensor 114A, 114B, 114C, 114D. The sensors 114A, 114B, 114C, 114D can be configured to detect one or more process parameters of the respective assets 110A, 110B, 110C. The sensors 114A, 114B, 114C, 114D can include a vibration sensor, a flow meter, a temperature sensor, a pressure sensor, and any other sensor type that can measure a process characteristic of an asset. The vibration sensor can detect a time-dependent vibration data associated with the operation of a respective asset 110A, 110B, 110C (e.g., data characterizing the vibration of the machine over a period of time) or a component 112D of the respective asset 110C. The sensors 114A, 114B, 114C, 114D can transmit detected signals to the anomaly detection system 104.

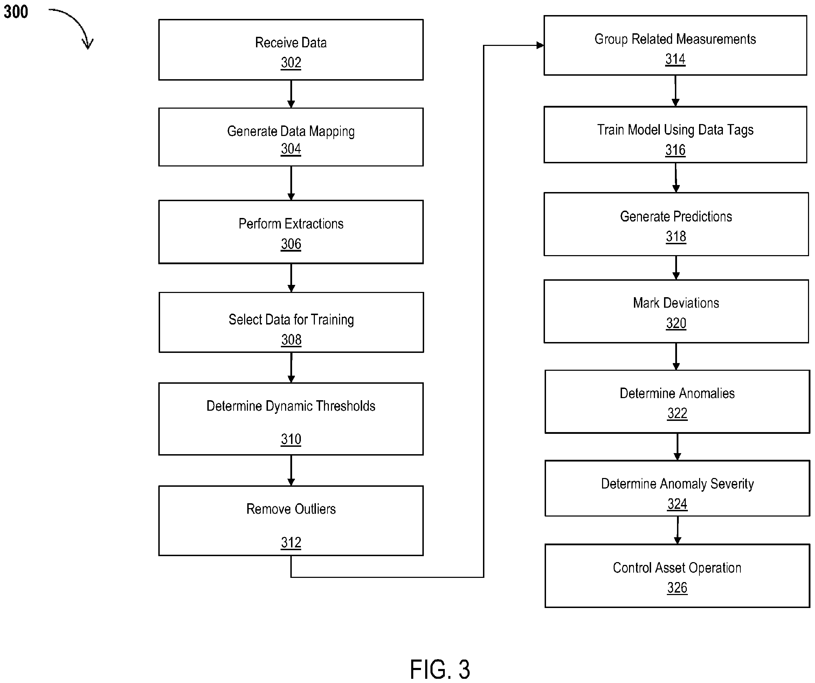

The anomaly detection system 104 can include an anomaly detection module 116 and a storage 118 that can be included in a cloud data system and/or on-premise data systems. The anomaly detection module 116 can include a computing system configured to process, using a machine learning model, the signals received from the sensors 114A, 114B, 114C, 114D and historical data stored by the storage 118 to detect fault frequencies, by performing the process described with reference to FIG. 3. In some embodiments, the computing system of the detection module 116 can include a data processor, and a memory storing non-transitory, computer-readable instructions, which when executed cause the data processor cause the processor to perform operations described herein. The one or more storages 118 may include one or more physical storage media or devices (e.g. hard disk drives, persistent flash memory, random access memory, optical media, magnetic media, and the like) configured for storing processed and unprocessed sensor data for long term storage. It should be noted that the storage 118 can be included in the anomaly detection system 104, as shown in FIG. 1, or can be external to the anomaly detection system 104. The storage 118 can include a historian database (or plant asset database) for access by the anomaly detection module 116 (executing on system computers) to build/train a predictive model to determine asset anomalies. Based on the type of output data archived by the storage 118, for a process variable, the anomaly detection module 116 may build/train a predictive inferential model, such as a machine learning model, a finite-impulse response model with a subspace identification technique, a linear regression model with a projection latent structure technique, or a hybrid finite-impulse response model with subspace identification and projection latent structure techniques, and the like. The anomaly detection system 104 can transmit detected fault frequencies to the user equipment 106.

The user equipment 106 can include a computer, a smart phone, a tablet, an Internet of Things (IoT) device, and/or other computer or processor-based devices accessible by a user 120. The user equipment 106 may include a display 122, a processor 124, memory 126, an input interface 128, and a communication interface 130. The processor 124 can process instructions for execution of implementations of the present disclosure. For example, the processor 124 can process detected fault frequencies received from the anomaly detection system 104 to format them for display using the display 122. The processing can include, but is not limited to, instructions stored in the memory 126 to display detected fault frequencies as graphical information on the display 122. Example displays include, but are not limited to, a thin-film-transistor (TFT) liquid crystal display (LCD), or an organic light emitting diode (OLED) display. The memory 126 stores information within the user equipment 106. In some implementations, the memory 126 can include a volatile memory unit or units, and/or a non-volatile memory unit or units. In other implementations, removable memory can be provided, and can include, but is not limited to, a memory card. Example memory cards can include, but are not limited to, a secure digital (SD) memory card, a mini- Secure Digital (SD) memory card, a Universal Serial Bus (USB) stick, and the like.

The display 122 can enable the user 120 to provide a user input associated with the displayed fault frequencies. In some implementations, the input user interface 128 can include a keyboard, a touchscreen, a mouse, a trackball, a microphone, a touchpad, and/or appropriate combinations thereof. In some implementations, an audio codec (not shown) can be provided, which receives audible input from a user or other source through a microphone and converts the audible input to usable digital information. The audio codec can generate audible sound, such as through a speaker that is provided with the user equipment 106. Example sounds can include sound from voice telephone calls, recorded sound (e.g., voice messages, music files, etc.), and/or sound generated by applications operating on the user equipment 106. The user equipment 106 can transmit the user input to the anomaly detection system 104 and/or an asset 110A, 110B, 110C of the industrial environment 102 to modify an operation (e.g., stop for repair) of the asset 110A, 110B, 110C to prevent a malfunction.

The assets 11 0A, 110B, 110C, the anomaly detection system 104, and the user equipment 106 can communicate over the network 108 through a connectivity interface(s). In some implementations, the connectivity interface(s) can include a satellite receiver, cellular network, a Bluetooth system, a Wi-Fi system (e.g., 802.x), a cable modem, a DSL/dial-up interface, a private branch exchange (PBX) system, and/or appropriate combinations thereof. Each of these connectivity interfaces enables data to be transmitted to/from the network 108. In some implementations, the network 108 can be provided as a local area network (LAN), a wide area network (WAN), a wireless LAN (WLAN), a metropolitan area network (MAN), a personal area network (PAN), the Internet, and/or combinations thereof.

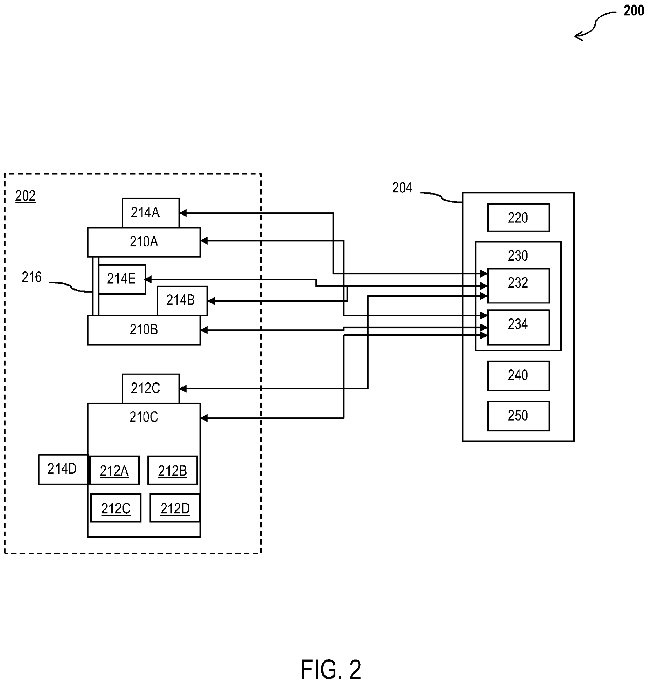

FIG. 2 is a diagram illustrating a system 200 for asset monitoring. The system 200 includes an industrial environment 202, such as an industrial environment, and a computing device 204. The industrial environment 202 includes a plurality of industrial assets, shown as industrial asset 210A, 210B, and 210C, which can be collectively referred to as industrial assets. The industrial assets can include a variety of equipment or machinery used in a particular industrial domain. For example, the industrial assets can include compressors, pumps, pump motors, heat exchangers, turbines, turbomachinery, or the like. Any of the industrial assets 210A, 210B, and 210C can include multiple components 212A, 212B, 212C, 212D. The industrial environment 202 also includes sensors coupled to the plurality of industrial assets, to a particular component 212A of an asset 210C or a connector 216 that connects a plurality of assets 210A, 210B enabling a joint operation of the connected assets (e.g., a flow of fluid or current between the assets). The sensors, shown as sensors 214A, 214B, 214C, 214D, and 214E can be collectively referred to as sensors. The sensors can include sensors configured to generate data signals or measurements associated with a vibration, a rotation, an acceleration, an emission, a flow or the like of the industrial assets.

As shown in FIG. 2, the system 200 also includes the computing device 204. The computing device 204 can be communicatively coupled to the industrial assets and to the sensors. In some implementations, any of the computing device 204, the industrial assets, and/or the sensors can be coupled via a wired communication means. In some implementations, the computing device 204 can be coupled to any other computing devices, the industrial assets, and/or the sensors via a wireless communication means (e.g., over a network, as described with reference to FIG. 1). In some implementations, the computing device 204 can be coupled to any other computing devices, the industrial assets, and/or the sensors via a network, such as a virtual private network configured to share data within the industrial environment 202.

The computing device 204 includes a data processor 220, an anomaly detection system 230 (e.g., anomaly detection system 104 described with reference to FIG. 1), a memory 240, and a display 250. The anomaly detection system 230 can include computer-readable instructions and predictive models (machine learning models), which when executed by the data processor 220 monitor and diagnose assets to detect asset anomalies by performing the process 300 described in relation to FIG. 3.

The anomaly detection system 230 includes a data processing engine 232 and a controller 234. The data processing engine 232 can be coupled to the sensors and can receive measurement data from the sensors for use in monitoring the operation and health of the assets. The data processing engine 232 can include one or more rules used to collect basic information about each of the assets, map the collected data, select data for training, perform anomaly detection, train models to generate predictions, and validate the anomaly detection based on deviations from predicted asset behavior.

The controller 234 is coupled to each of the industrial assets and can be configured to control an operation of the industrial asset based on the validated anomaly detection performed by the data processing engine 232, as described in detail with reference to FIG. 3. The controller 234 can be configured to modify operations of the industrial asset, such as powering on or powering off the industrial asset, adjusting a rate of speed of the industrial asset, modifying a frequency of operation of the industrial asset, or the like, to prevent a malfunction of the assets.

The computing device 204 also includes a memory 240. The memory 240 can include a database or other similar data structure which can be used to store computer-readable instructions, data filtering and selection rules, predictive models (machine learning models), as well as sensor data received from the sensors and configuration data associated with controlling the operation of the industrial asset using the controller 234.

The computing device 204 also includes a display 250. The display 250 can include a graphical user interface (not shown). The display 250 can provide the results of the maintenance analysis, any alerts generated by the anomaly detection system 230, and operational data associated with the operation of the industrial asset and/or the sensor to a user or operator of the anomaly detection system 230.

FIG. 3 is a process flow diagram illustrating an example process 300 for detecting asset anomalies based on predictive analytics. Utilizing predictive analytics can facilitate anomaly detection in new and complex assets including multiple components and/or generating an alert when anomalies deviating from predicted behavior are identified.

At 302 data is received. The data can be received from a data storage (e.g., storage 118 described with reference to FIG. 1) and/or sensors (e.g., sensors 114A, 114B, 114C, 114D described with reference to FIG. 1 or sensors described with reference to FIG. 2) configured to monitor assets of an industrial environment (e.g., industrial environment 102, 202 described with reference to FIG. 1 and FIG. 2, respectively) or one or more components of the assets or a connector (e.g., connector 216 described with reference to FIG. 2) of multiple assets. The data can include a collection of basic information about an asset that is being monitoring along with the tags defining a data (process variable) type. The data can include a (static) vibration signal recorded over a period of time and/or process data recorded over a period of time or a multiple time points. The vibration signal can include data characterizing vibrations measured by a vibration sensor affixed (attached) to a static or mobile asset during asset operation. The vibrations measured by the vibration sensor can be indicative of the operation of multiple components of the asset, which are activated during asset operation. The vibration data can include one or more (time variable) parameters, such as amplitude, phase, and direct signal.

The collected process data may include measurements for various measurable process variables, such as ambient temperature, differential pressure, discharge/suction temperature, flow, pressure, polytrophic efficiency, driver load, and flow data. In particular, the measurable process variables can include a stream flow rate as measured by a flow meter, a process temperature as measured by a temperature sensor, component concentrations as determined by an analyzer, and the like. The measurable process variables can also include measurements for process output variables, such as the concentration of produced materials, as measured by analyzers. The measurable process variables can further include measurements for manipulated input variables, such as a flow rate as set by a controller (e.g., valve) and determined by a sensor (e.g., flow meter). The measurable process variables reflect the operation conditions of the respective asset(s) during a particular time period. In some implementations, time stamps are added to the collected data to generate a time series for each data set of a particular data type. In some implementations, samples of the data sets can be configured according to a node status, such that data samples corresponding to an invalid node status can be replaced with NULL and/or empty values (representing that data is not valid).

At 304, data mapping is generated. Data mapping can be based on a data validation rule that can verify whether the datatype of a signal or measurement received from the sensor matches the datatype of a pre-determined data tag and can add, where necessary, tags to each data type to generate tags for all data types corresponding to the asset.

At 306 extractions are performed. In some implementations, a portion of the mapped data can be extracted to perform a selected process. In some implementations, the extracted data can be formatted to be used as an input for a training model.

At 308, a portion of the data is selected for training. In some implementations, the data is initially filtered to remove unneeded portions. For example, if the signal or measurement received from a sensor contains NULL and/or empty values, and/or the signal or measurement received from the sensor is missing a set number of samples, the data is filtered to remove NULL and/or empty values. The portion of the data that can be used for training can be automatically selected based on relative standard deviation (RSD) for each data type corresponding to each tag. RSD can be applied to multiple windows generated from each data set, corresponding to each tag. For example, each data set can be divided into multiple (e.g., 12-13) windows of a set window size (that can vary with the sample frequency) starting from latest time to oldest time. RSD of each window can be calculated for all data sets (features) individually to identify a most stable region (corresponding to a first time period) within the respective data set. After the most stable regions of all data sets are identified, the most stable region (corresponding to a second time period) across all data sets can be determined. For example, an average RSD can be calculated for each of the window using all the available features. A set percentage (e.g., at least 50 percent) of averaged RSD windows can be selected as base to determine training data. The training region selection enables the use of all features to find most stable regions that can be used as a training data portion corresponding to the second time period. In some implementations, raw phase data can include phase rollovers (e.g., raw phase may move from 10 to 0 and after 0 it may become 358) that can be corrected using a phase rollover including a phase wrapper that can convert the modified phase (e.g., 358) to an adjusted phase (e.g., -2). Wrapped phase delta corresponds to the difference between current phase and previous phase that can be calculated to avoid a 'starting point effect'. The starting point effect may lead to a different wrapped phase dependent on the wrap starting point. A minimum- maximum scaler can be applied based on the training data phase and can transform the current phase to a predicted phase. A reverse phase wrapper can be applied to bring predicted scaled delta wrapped phase into an original phase.

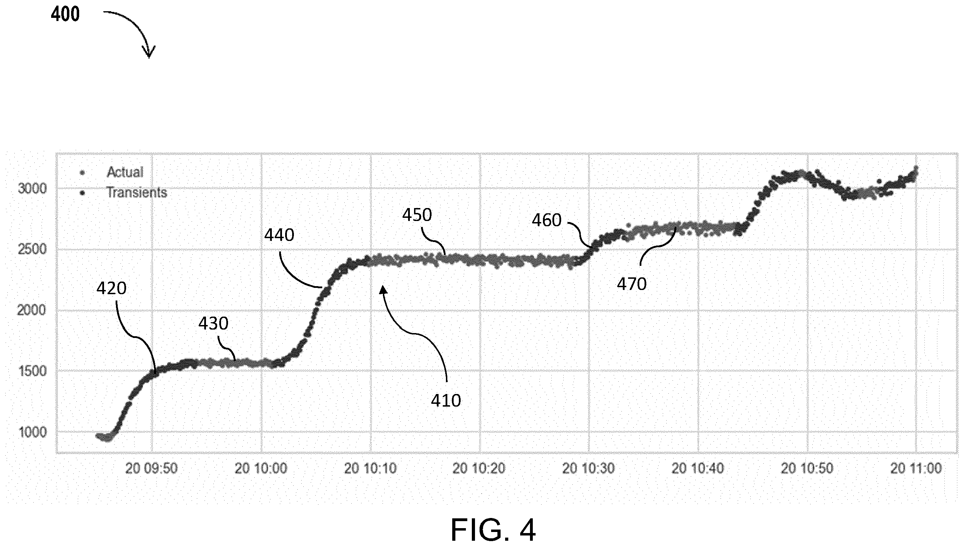

Further, in some embodiments, when the system (e.g., system 200) is selecting data at 308, the system can be configured to identify one or more states of the asset corresponding to one or more portions of the data being selected, as discussed in greater detail below in reference to FIG. 4.

At 310, dynamic thresholds are determined for selected model predictions. The dynamic thresholds can be determined based on the RSD results to exclude an anomalous region. The dynamic thresholds can be configured to change as the predictions change over time, such that a change in RSD can also trigger a change in the dynamic thresholds. For example, if RSD of a data set (feature) is equal or less than 5 then dynamic threshold can be 10%. If RSD is equal or less than 8 then dynamic threshold can be 16% and so on. Calculated dynamic thresholds can be multiplied with model predictions to get dynamic thresholds in either of the positive and the negative sides of each feature. Lastly, a region is marked anomalous if actual values lie outside the dynamic thresholds. Applying a proportionality between RSD and the dynamic thresholds, such that higher the training data RSD higher the dynamic thresholds, can significantly reduce false anomaly alarms.

Further, in some embodiments, the system (e.g., system 200) can be configured to determine the dynamic thresholds based in part upon the one or more states of the asset corresponding to one or more portions of the data selected, as discussed in greater detail below in reference to FIG. 4.

At 312, outliers are removed from the cleaned training data portion to generate a consistent training data portion. The mean and standard deviations are calculated and data within a set standard deviation range (e.g., +/- 6) can be selected to exclude outliers. In some embodiments, other statistical measurements can also be used, depending on the asset type.

At 314, related measurements are grouped using a correlation algorithm (e.g., Pearson correlation, cross correlation or autocorrelation). The values within the consistent training data portion with a correlation coefficient above a set threshold can be grouped to generate derived data including a grouped training data portion.

At 316, predictive models are trained using data tags. The grouped training data portion and the tags can be provided as input to a model to train the model to predict a correlation of each tag with each group of the grouped training data portion. In some embodiments, the model can include a machine learning model based on linear regression and a gradient boosting algorithm. The model can be trained for each new asset and/or new tags. The model can perform predictive analyses based on machine learning models, the asset data can be generated by patterns in several signals corresponding to a particular tag.

At 318, predictions are generated. Once the model is trained, the model can make prediction for selected tags. The model can process the data and generate outputs including a predicted value in association with the tags. Machine learning techniques can be utilized to determine when a diagnosis matches a predicted pattern. An alternative method to solve the anomaly detection problem is to use a physics based digital twin model tuned to a specific asset using data from healthy operation of the respective asset. The physics-based model of the asset can be configured using analytical methods. The physics based digital twin model can run in a computing environment to predict healthy behavior of the asset.

At 320, deviations are marked. The outputs generated by the predication model can be marked to flag deviations of the asset operation from a predicted normal (standard healthy) operation of the asset. The markers can include temporal markers to mark a start of a deviation and can also include feature markers to identify deviations associated with a feature (e.g., component or operation mode) of the asset.

At 322, anomalies are determined for identified deviations. The anomalies can be determined by comparing actual values of new samples of asset data to predicted values of asset behavior relative to the corresponding tags. For example, if an actual value differs from a predicted value for a particular tag and the difference is greater than a threshold calculated at the training time, an anomaly event is generated for areas where anomalies were detected. The anomalies can be marked using set points and by applying a persistency logic. The set points can be used to identify a standard deviation within the training data portion. Data samples outside the standard deviation can be identified as problematic (anomalies), and the identified data samples can be removed. In some implementations, metadata identifying the problem associated with deviations can be stored along with the time series data in a way that can maintain the size of the time series data (e.g., without significantly increasing the space required to store the time series data). The set points can be constant thresholds over all time. Deviations (anomalies) can be marked if actual values fall outside the set points. The deviations (anomalies) can be identified and removed. The data samples can be processed for deviations in a data processing engine. The data processing engine can utilize data quality or data validation rules to identify deviations. Persistency logic can be used to avoid unnecessary spikes to be alerted as anomaly. The persistency logic can define the portion of the data that can be identified as deviations. For example, the persistency logic can define that out of 10 consecutive timestamps at least 5 can be marked as deviations based on either dynamic thresholds or set points. In some implementations, the training data portion can be resized to exclude deviating data identified as data anomalies.

At 324, anomaly severity can be determined by aggregating the deviation information across measurements over time. The severity of the anomaly can be compared to a severity threshold to determine whether an alert and/or a report indicating the determined anomalies should be generated. Based on the anomaly determination, new alert generation can be suppressed so that the user is alerted once, rather than multiple, in some cases hundreds of times, for a specific problem. In some implementations, generating an alert can combine fuzzy logic and machine learning to identify whether two identified anomalies are the same. The signals contributing to the first anomaly can be analyzed and the pattern of the contributing signals can be compared to the pattern of contributing signals in the second anomaly. If the patterns are a match (using the combination of fuzzy logic and machine learning), then the second anomaly cannot generate a new alert. Instead, the second anomaly information can be added to the alert corresponding to the first anomaly. Thus, one alert can be generated for two separate anomalies identified at two distinct timestamps.

In some implementations, the report indicating the determined anomalies can be displayed on an interface (e.g., input user interface 128 described with reference to FIG. 1) to present the relevant asset anomalies in a single analysis pane. This approach can enable a user to see maintenance analysis information, varying past alerts, and/or previous failures in a single screen. For example, data quality alerts can be highlighted on a single time series tag. A maintenance analysis record can be displayed on a separate axis with a common time stamp. And, if there is a calibration record, it can be shown as corresponding to a single tag. The anomalies and failure modes can be displayed as bands within the time series tags, and can highlight only the contributing tags. By filtering the tags to display only the contributing tags, the scope of information displayed to the user can be reduced. The maintenance analysis records, which can apply to the entire asset, can be displayed in a separate asset within the same time window giving an overall context to the user.

In some implementations, when using predictive diagnostics to diagnose the health of an asset, the nature of the predictive diagnosis can include a chance that the health of the asset is misdiagnosed. As a result, an engineer can be required to assess the validity of the diagnosis. In order to assess the validity, the engineer can look at the overall health of the asset. However, this information can be spread amongst several different systems, such as Computerized Maintenance Management Software (CMMS) and Enterprise Asset Management (EAM), vibration monitoring systems, lube oil analysis, calibration information, and/or the like. This can create a cumbersome, time consuming process to assess a diagnosed problem. It can be desirable for this contextual information, needed for problem assessment, to be presented in one place, for example, in a single pane of glass. But, to reduce user effort and decrease time required to address the diagnosed problem, the contextual information may need to be presented in the context of the current problem.

At 326, an asset operation is controlled based on the detected anomalies. In some implementations, in response to determining one or more anomalies that are significantly different from predictive behavior of the asset, operation of the asset undergoing analysis can be modified. For example, when a turbine is diagnosed with anomalous vibrations, the rotation speed of the turbine can be modified in order to correct or address the anomalous behavior. For example, operation of the turbine may be terminated in order to perform maintenance. Other modifications of asset operations are possible.

In some implementations, a confidence level of the identified asset anomaly can be determined and if the confidence level exceed a threshold, a trigger is automatically generated to minimize a risk of asset malfunction. For example, predictive analyses can generate an alert about a potential future failure of an industrial asset, and a risk level of associated malfunction can be included in the diagnosis. Accurate maintenance analysis records and data can be desirable because, for example, shutting down a compressor can be a multi-million dollar decision. As a result, it can be desirable for the uncertainty in a diagnosis to be minimized. But confidence in the existence of a problem can take months to develop. Even though relevant information exists, analysis at scale can be cumbersome. For example, there can be thousands of maintenance records, root cause analysis reports, manuals, and/or the like. It can be desirable to use this data to help an engineer find relevant information that can increase the rate of investigation. It can be cumbersome to assess the validity of a predictive maintenance analysis diagnosis. And searching through billions of structured and unstructured time series data points can be cumbersome. But it can be desirable to utilize this data to find relevant information that can speed up investigations.

In some implementations, natural language based search can be utilized for knowledge management of unstructured records and/or manuals. This can make search easy for a user to find relevant information when searching millions of data records. Machine learning can be utilized to identify past tests or thresholds which have failed and have been determined to match a current problem. Then machine learning can be utilized to identify the matching past problems, including any tests or thresholds which have failed and recommend the identified past problems as the top recommendations for a current problem. Fixes to the past problems corresponding to the current problem can be utilized to efficiently manage alerts. Machine learning can be used to process past time series signals, which can be searched to identify patterns that can be determined to match the current tests or thresholds which have failed. Maintenance analysis actions from the past can be correlated with the current data and can provide a clear idea of past failures that occurred when similar problems were identified.

In some implementations, predictive analysis solutions can use physics or statistics based models and/or rules to predict the health of an asset. Updating models due to process changes and/or diagnosis false positives can include a significant cost and can be cumbersome to the user. It can be desirable to maintain the models based on process conditions and/or when a diagnosis is incorrect.

In some implementations, unsupervised learning can update predictive models as process conditions change. Smart recommendations can learn whether a diagnosis was correct or incorrect. This information can be used to update the model. For example, the next time a problem is diagnosed, the diagnosis can be more accurate. For process related updates, data can be continuously fed into the model. Whenever the data cannot fit the confidence bands of the model, the model can trigger recalibration. This can result in automatically updating the model. When the user analyzes a problem and specifies that the diagnosis is a false positive, this information can be forwarded to the model. Similarly, to fix the issue, the recommendation due to a synchronization with the work order can be considered to be a true diagnosis. The recommendation can send this information back to the machine learning model and can use this information for reinforced learning of the model. As a result, the model can automatically update.

FIG. 4 is a graph 400 illustrating and exemplary data set 410 corresponding to measurements provided by a sensor configured to monitor an asset. The system (e.g., system 200) can be configured to receive many data sets, similar to the data set 410 presented in graph 400, for many different sensor types monitoring many different assets.

By way of a non-limiting example, in some embodiments, the data set 410 can correspond to data comprising one or more measurements collected from a speed sensor configured to monitor the speed of a rotating shaft within an asset. During operation of the asset, the asset can be configured to power on, and then throughout operation, can be configured to operate in a plurality of different steady state operation modes, moving from one steady state operation mode to the next via a plurality of transient states, and the speed sensor can be configured to collect the data 410. The system described herein can then be configured to determine, from the data set 410, a plurality of transient states 420, 440, 460 and a plurality of steady states 430, 450, 470 from the data set 410. It should be noted that a variety of sensor types other than speed sensors can also be used.

In this case, as described above, when the system (e.g., system 200) is selecting data (in reference to step 308 of FIG. 3), the system can be configured to select the one or more portions of the data 410 based on the determined state of the asset corresponding to one or more portions of the data selected.

Additionally, as described above (in reference to step 310 of FIG. 3), the system can be configured to determine the dynamic thresholds for selected model predictions for the one or more portions of the data 410 based in part upon the state of the asset corresponding to one or more portions of the data selected. For example, for a given steady state 430, 450, 470, it may be desirable for the dynamic threshold for the speed of the shaft to be set to a narrow range, as deviations in the speed of the shaft in a given steady state 430, 450, 470 can be metrics of interest. However, for a given transient state 420, 440, 460, as the speed of the shaft is constantly changing, a different dynamic threshold for the speed of the shaft may be desirable.

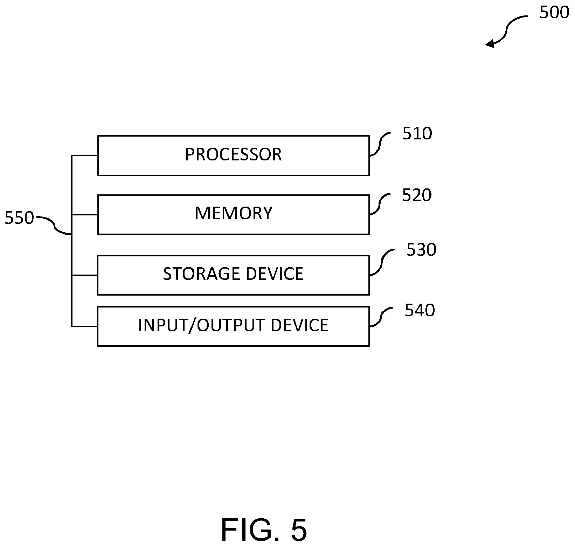

In some implementations, the current subject matter may be configured to be implemented in a system 500, as shown in FIG. 5. The system 500 may include a processor 510, a memory 520, a storage device 530, and an input/output device 540. Each of the components 510, 520, 530 and 540 may be interconnected using a system bus 550. The processor 510 may be configured to process instructions for execution within the system 500. In some implementations, the processor 510 may be a single-threaded processor. In alternate implementations, the processor 510 may be a multi-threaded processor. The processor 510 may be further configured to process instructions stored in the memory 520 or on the storage device 530, including receiving or sending information through the input/output device 540. The processor 510 may be further configured to execute the processes described with reference to FIGS. 2 and 3. The memory 520 may store information within the system 500. In some implementations, the memory 520 may be a computer-readable medium. In alternate implementations, the memory 520 may be a volatile memory unit. In yet some implementations, the memory 520 may be a non-volatile memory unit. The storage device 530 may be capable of providing mass storage for the system 500. In some implementations, the storage device 530 may be a computer-readable medium. In alternate implementations, the storage device 530 may be a floppy disk device, a hard disk device, an optical disk device, a tape device, non-volatile solid state memory, or any other type of storage device. The input/output device 540 may be configured to provide input/output operations for the system 500. In some implementations, the input/output device 540 may include a keyboard and/or pointing device. In alternate implementations, the input/output device 540 may include a display unit for displaying graphical user interfaces.

In some implementations, the current subject matter may include one or more of the following optional features. The received query may require access to the data stored in different locations in the database system. One or more locations in the database system may be considered a data consumption location and one or more other locations in the database system may be considered a data production location.

In some implementations, the plurality of fragments may include a root fragment and one or more non-root fragments. The root fragment may be configured to be executed at the data consumption location of the database system and may be further configured to receive data resulting from execution of the non-root fragments at the data production location of the database system.

In some implementations, execution of the root fragment may be configured to trigger execution of the non-root fragments. Further, execution of a query execution pipeline of the root fragment may include executing a receiving operator to receive data queried by the received query from one or more non-root fragments. Moreover, execution of a query execution pipeline of the non-root fragment may include executing a transmitting operator to transmit data queried by the received query to the root fragment. Additionally, each non-root fragment may be configured to be executed asynchronously.

The systems and methods disclosed herein can be embodied in various forms including, for example, a data processor, such as a computer that also includes a database, digital electronic circuitry, firmware, software, or in combinations of them. Moreover, the above-noted features and other aspects and principles of the present disclosed implementations can be implemented in various environments. Such environments and related applications can be specially constructed for performing the various processes and operations according to the disclosed implementations or they can include a general-purpose computer or computing platform selectively activated or reconfigured by code to provide the necessary functionality. The processes disclosed herein are not inherently related to any particular computer, network, architecture, environment, or other apparatus, and can be implemented by a suitable combination of hardware, software, and/or firmware. For example, various general-purpose machines can be used with programs written in accordance with teachings of the disclosed implementations, or it can be more convenient to construct a specialized apparatus or system to perform the required methods and techniques.

Although ordinal numbers such as first, second, and the like can, in some situations, relate to an order; as used in this document ordinal numbers do not necessarily imply an order. For example, ordinal numbers can be merely used to distinguish one item from another. For example, to distinguish a first event from a second event, but need not imply any chronological ordering or a fixed reference system (such that a first event in one paragraph of the description can be different from a first event in another paragraph of the description).

The foregoing description is intended to illustrate but not to limit the scope of the invention, which is defined by the scope of the appended claims. Other implementations are within the scope of the following claims.

These computer programs, which can also be referred to programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, the subject matter described herein can be implemented on a computer having a display device, such as for example a cathode ray tube (CRT) or a liquid crystal display (LCD) monitor for displaying information to the user and a keyboard and a pointing device, such as for example a mouse or a trackball, by which the user can provide input to the computer. Other kinds of devices can be used to provide for interaction with a user as well. For example, feedback provided to the user can be any form of sensory feedback, such as for example visual feedback, auditory feedback, or tactile feedback; and input from the user can be received in any form, including, but not limited to, acoustic, speech, or tactile input.

The subject matter described herein can be implemented in a computing system that includes a back-end component, such as for example one or more data servers (cloud data systems and/or on-premise data systems), or that includes a middleware component, such as for example one or more application servers, or that includes a front-end component, such as for example one or more client computers having a graphical user interface or a Web browser through which a user can interact with an implementation of the subject matter described herein, or any combination of such back-end, middleware, or front-end components. The components of the system can be interconnected by any form or medium of digital data communication, such as for example a communication network. Examples of communication networks include, but are not limited to, a local area network ("LAN"), a wide area network ("WAN"), and the Internet.

The computing system can include clients and servers (cloud data systems and/or on-premise data systems). A client and server (cloud data system and/or on-premise data system) are generally, but not exclusively, remote from each other and typically interact through a communication network. The relationship of client and server (cloud data system and/or on-premise data system) arises by virtue of computer programs running on the respective computers and having a client-server relationship to each other.

The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and sub-combinations of the disclosed features and/or combinations and sub-combinations of several further features disclosed above. In addition, the logic flows depicted in the accompanying figures and/or described herein do not necessarily require the particular order shown, or sequential order, to achieve desirable results. Other implementations can be within the scope of the following claims.

## Claims

1. A method comprising:
receiving data characterizing measurement data values acquired by a sensor coupled to an industrial asset;
processing the data to determine cleaned training data;
processing the cleaned training data to generate derived measurements;
training a model using the cleaned training data and the derived measurements;
generate a predicted asset data using the model;
determining deviation data in a new sample of asset data based on a difference between the new sample of the asset data to the predicted asset data;
determining, based on the deviation data and historical deviation data, deviations across measurements over time; and
infer a severity of an anomaly based on the deviations across the derived measurements over time, the severity being used to generate an alert.

2. The method of claim 1, further comprising:
controlling operation of the asset based on one or more of the predicted asset data, the deviation data and the deviations across measurements over time.

3. The method of claim 1, wherein the sensor is affixed to an asset in an industrial environment and the data further characterizes a state of health of the asset.

4. The method of claim 3, wherein the sensor is included in a sensor health monitoring system associated with the industrial environment and the data further characterizes a state of health of the sensor.

5. The method of claim 1, further comprising determining one or more states of the asset based on the cleaned training data.

6. The method of claim 5, further comprising:
selecting a portion of the data for training the model; and
determining one or more dynamic thresholds for the selected portion of the data.

7. The method of claim 6, wherein selecting the portion of the data for training the model comprises removing outliers from the data to generate the cleaned training data.

8. The method of claim 7, wherein selecting the portion of the data for training the model comprises resizing the portion of the data within a set standard deviation range.

9. The method of claim 7, wherein the one or more dynamic thresholds are determined based on the set standard deviation range to exclude an anomalous region.

10. The method of claim 9, wherein the model comprises one or more machine learning models trainable to generate the predicted asset data.

11. The method of claim 10, wherein the one or more machine learning models can be recalibrated and updated based on a fit of two or more estimated new samples falling outside of the one or more dynamic thresholds.

12. The method of claim 1, further comprising:
generating data mapping based on a data validation rule.

13. The method of claim 12, wherein the data validation rule verifies association between datatype of the data from the sensor and a pre-determined data tag.

14. A system comprising:
a data processor, and a memory storing non-transitory, computer-readable instructions, which when executed cause the data processor to perform operations comprising:
receiving data characterizing measurement data values acquired by a sensor coupled to an industrial asset;
processing the data to determine cleaned training data;
processing the cleaned training data to generate derived measurements;
training a model using the cleaned training data and the derived measurements;
generate a predicted asset data using the model;
determining deviation data in a new sample of asset data based on a difference between the new sample of the asset data to the predicted asset data;
determining, based on the deviation data and historical deviation data, deviations across measurements over time; and
infer a severity of an anomaly based on the deviations across the derived measurements over time, the severity being used to generate an alert.

15. The system of claim 14, wherein the operations comprise:
controlling operation of the asset based on the one or more of the predicted asset data, the deviation data and the deviations across measurements over time.

16. The system of claim 14, wherein the sensor is affixed to an asset in an industrial environment and the data further characterizes a state of health of the asset.

17. The system of claim 16, wherein the sensor is included in a sensor health monitoring system associated with the industrial environment and the data further characterizes a state of health of the sensor.

18. The system of claim 14, wherein the data processor is further configured to perform operations comprising:
determining one or more states of the asset based on the cleaned training data;
selecting a portion of the data for training the model;
determining one or more dynamic thresholds for the selected portion of the data; and
removing outliers from the data and resizing the portion of the data within a set standard deviation range.

19. The system of claim 18, wherein the data processor is further configured to provide one or more of the data characterizing measurement data values, the cleaned training data, the one or more states of the asset, the portion of the data for training the model, the dynamic thresholds, predicted asset data, the deviation data and the deviations across measurements over time to a graphical user interface display.

20. The system of claim 14, wherein the severity of the anomaly is inferred by aggregating the deviation data across a time interval.
